# EUROPEAN PATENT APPLICATION

(11) **EP 3 831 594 A1**
(43) Date of publication of application: **09.06.2021**
(21) Application number: 19213359.3
(22) Date of filing: 03.12.2019
(51) Int. Cl.: B32B 3/08, B32B 17/10, B32B 27/22

(54) **WINDSHIELDS HAVING AN OBSCURATION AREA WITH REDUCED OPTICAL DISTORTION**

(71) Applicant: Kuraray Europe GmbH, 65795 Hattersheim (DE)
(72) Inventor: Keller, Uwe, 77210 Avon (FR)
(74) Representative: Janßen, Christian Oliver

(57) **Abstract**

The present invention relates to windshields having an obscuration area with reduced optical distortion for operating optical devices.

## Description

The present invention relates to windshields having an obscuration area with reduced optical distortion for operating optical devices.

Most windshields for cars are assembled from two glass sheets combined by an interlayer which is usually made from polyvinyl butyral (PVB). The inner glass sheet is generally provided with a non-transparent, mostly black, frame to protect the sealing or the adhesive which mechanically connects the windshield with the chassis from UV radiation. A common technique is to silk screen print low melting black glass frit on the glass surface and then sinter this frit at temperatures over 600 °C. Additionally, other sensors and devices are usually mounted behind non-transparent obscuration areas to avoid stray light and to cover the devices form being seen form outside of the vehicle. Such obscuration areas can also be provided by such black frits as disclosed in US20160243796. However, this technique can lead to optical distortion in the glass and thus, be problematic in the operation of optical sensors positioned behind the windshield.

One solution to this problem has been proposed in WO 2019/121535, which provides obscuration areas printed onto a thin film of PVB which are cut into shape and used together with a standard PVB interlayer. However, the demands regarding the optical quality in windshields is permanently increasing and there is still a need for windshields with an improved optical distortion profile.

Thus, it was one object of the invention to provide windscreens with obscuration areas with reduced optical distortion.

It has now been found that the optical distortion caused by the edges of the thin film patches by which the obscuration area is being introduced can be substantially decreased by an optimized positioning and cutting of the patches of film A.

Accordingly, one aspect of the present invention is a windshield comprising two sheets of glass and an interlayer wherein the interlayer comprises at least one film B containing a polyvinyl acetal PB and at least one plasticiser WB, and a film A containing a polyvinyl acetal PA, and optionally at least one plasticiser WA, wherein film A is provided with an obscuration area characterized in that
a. the surface area of film A is equal to or more than 50% smaller than the surface area of film B, and
b. at least 30% of the total length of the edge of film A is oriented in an angle of 10º to 80º or 100º to 170º with 0º being defined by a horizontal line through the windshield.

The term "obscuration area" refers to any region of the laminate having a light transmission in the visible spectrum of less than 5%. In a variant, the obscuration area may fade out towards transparency. In such variants, at least a part of the obscuration area of the laminate has a light transmission in the visible spectrum of less than 5%.

Film A is generally applied to the surface of film B and the surface area of film A is substantially smaller than the surface area of film B. In other words, a small patch of film A is combined with a film B, which in turn is generally the size of the complete windshield. Preferably, the surface area of film A is equal to or more than 65%, more preferably more than 80% smaller than the surface area of film B.

The "horizontal line of the windshield" should be understood to be a line which is the best fit of a line running parallel to the top and lower edge of the windshield. Thus, an edge with an angle of 0º is a horizontal and running parallel to the upper and lower edges of the windshield. Likewise, an edge with an angle of 90º is an passing at right-angle through the upper and lower edges of the windshield.

Preferably, at least 30%, more preferably at least 50%, even more preferably at least 60%, 70%, 80% or 90% of the total length of the edge of film A is oriented in an angle of 10º to 80º or 100º to 170º with 0º being defined by the horizontal line of the windshield. Preferably, it is oriented in an angle of 15 to 75º or 105 to 165º, more preferably 20 to 70º or 110 to 160º, even more preferably 30 to 60º or 120 to 150º and especially 40 to 50º or 120 to 150º.

With the edges of film A being oriented in such a fashion, the optical distortion is substantially reduced. Windshields are generally produced from two sheets of relatively thin float glass and an extruded PVB interlayer which bonds together both glass sheets under heat and pressure. However, the thin float glass usually shows a significant line defect - so called "float lines" that cause a certain amount of optical distortion. In order to minimize visibility of this particular optical distortion effect, the glass for a windshield is already arranged in such an orientation, that the lines are always vertically oriented. On the other hand, PVB interlayers are generally produced by extrusion, which leads to so called "extrusion lines" in the PVB films. Such extrusion lines are present in traverse direction of the PVB interlayer. It is thus believed that the inventive orientation of the edges of film A leads to a decreased superimposition of these lines and thus, to a reduced optical distortion.

In the simplest embodiment of the invention the patch of film A is a square with one corner pointing upwards and one corner pointed downwards and thus, 100% of the total length of the edges of film A are oriented in an angle of 45º.

Alternatively, the edges of film A are cut in a wave or zig zag pattern, also leading to the edges not running in a horizontal or vertical direction. It has surprisingly found that the visibility of the edges is substantially reduced when this type of cutting is applied. The amplitude, i.e. the peak deviation of the edge from zero of the zig zag or the wave pattern to the top of the pattern is from 0.5 to 10 cm, preferably from 1 to 5 cm, or from 0.5 to 3 cm, alternatively from 2 to 7 cm. The frequency, i.e. the distance between the individual peaks can be chosen from any value between 0.5 and 20 cm, e.g. from 0.5, 1, 2, 3, 4, 5 or 10 cm.

The optical distortion is measured using a LABSCAN-SCREEN system from ISRA VISION on a laminated windshield under an inclination angle of 60°.

In modern cars, various optical detection devices are positioned on the inside of the car behind the windshield. Optical detection devices are chosen from digital cameras, range finders, haze meters, rain sensors, target detectors, scanning laser devices (LIDAR) or related devices using electromagnetic radiation from within the UV/VIS and NIR/IR range of the spectrum. In the context of this invention, the area of the windshield which is used by the optical detection device is denoted "transparent detection area". The term "transparent" shall be understood that the detection area is at least sufficiently transparent for visible light for the detection device to perform properly. Since the edges of film A can to lead to optical distortion, it is preferred to have a certain minimum distance of these edges of film A to the transparent detection area.

Therefore, another embodiment of the invention provides that film A comprises transparent detection areas for optical detection devices wherein the minimum distance between any of the edges of film A and the edge of the transparent detection area is equal to or more than 2 cm, more preferably equal to or more than 5 cm.

It has also been surprisingly found that the optical distortion is minimized when film A is cut along the edge of the obscuration area, i.e. when the edge of film A is basically running along the edge of the obscuration area. Therefore, in another preferred embodiment, at least 30% of the total length of the edge of film A is distanced equal to or less than 5 mm from the closest edge of the obscuration area, more preferably, at least 50% of the total length of the edge of film A is distanced equal to or less than 2.5 mm, or even 1 mm from the closest edge of the obscuration area.

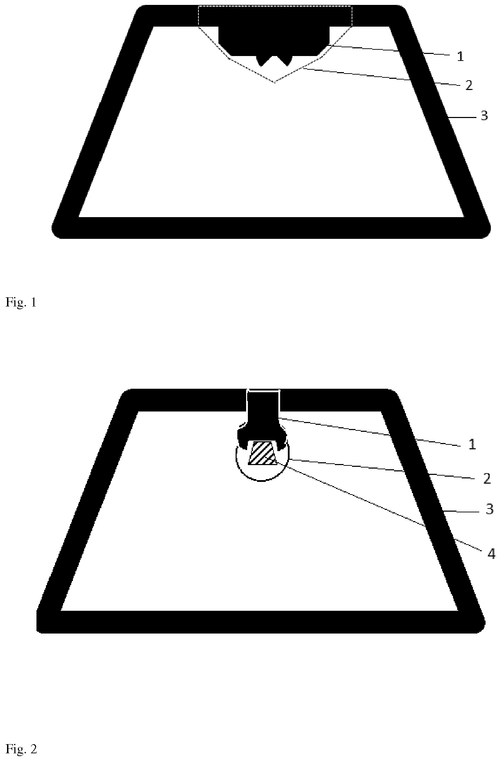

Fig. 1 shows an embodiment according to the invention with an obscuration area (1) wherein the edge (2) of film A in the area of the windshield which is not covered by the black glass frit (3) is not oriented vertically or horizontally to avoid additional optical distortion.
Fig. 2 shows an embodiment according to the invention with an obscuration area (1) and wherein the edge (2) of film A is located in a distance to the transparent detection area (4) in order to avoid additional optical distortion.

### Film A

Preferably, film A the amount of plasticiser WA in film A is less than 10 % by weight, more preferably less than 5 % by weight and most preferably less than 2 % by weight.

Hereinafter, the term "prior to lamination" refers to the state of the films A and B prior to having any contact to each other. For example, the term refers to the composition of each film separately formed and separately wound to individual rolls. The term "prior to lamination" refers to the state for the layers or films before combining them either in the lamination process of the laminated glass or prior to building a stack from the layers used for lamination.

The printed or coated layer contains an inorganic or organic pigment, which should not dissolve in the polymer matrix and thus resist migration from film A to B.

As pigments, preferable carbon black, iron oxides, polyaniline, perylenes or spinel pigments are used. The pigments may be dispersed in a carrier fluid like water, alcohol or mixtures of alcohol and water. Furthermore, binders like polyvinylalcohol, polyvinylbutyral, polyvinylpyrrolidone, polyacrylates, polyurethanes or poly styrene-acrylate may be present. Such printing compositions are referred to as "printing inks" or simple "inks" hereinafter.

Water-based printing inks are preferred over printing inks based on organic solvents since they do not swell or dissolve the film A and/or lead to film defects. Printing inks based on organic solvents can be used if the coating is thin and/or the drying step is fast such that the solvent does not migrate into the PVB film. It is beneficial to use a low molecular weight PVB as binder for the printing inks since it ensures good compatibility with the PVB containing films A and B.

The printing inks can be applied via techniques that are commonly known in the printing industry such as offset printing, rotogravure printing, flexography, and screen-printing, followed usually by a drying step.

Alternatively, a fully colored film A can be applied, i.e. a film A wherein a dye or pigment is added to the polyvinyl acetal mixture before or during extrusion.

Film A is produced separately from film B (for example extruded or solvent cast) and has either no plasticiser at all or sufficiently small proportion of plasticiser so that subsequent functionalization and processing is not adversely influenced.

### Film B

Film B may be any plasticized PVB-film known in the art. The films A and B may contain, in the starting state prior to lamination and/or in a stack prepared for lamination between glass sheets, a single plasticiser as well as mixtures of plasticisers both of different and identical composition. The term "different composition" refers to both the type of plasticiser and proportion thereof in the mixture. Film A and film B after lamination, i.e. in the finished laminated glass, preferably have the same plasticisers WA and WB. In a preferred variant, film A in its starting state, however, does not contain any plasticiser and after lamination contains plasticiser WB in equilibrium amount.

Plasticiser-containing films B used in accordance with the invention contain, in the starting state prior to lamination, at least 22 % by weight, such as 22.0 - 45.0 % by weight, preferably 25.0 - 32.0 % by weight and in particular 26.0 - 30.0 % by weight plasticiser.

Films A used in accordance with the invention may contain, in the starting state prior to lamination, less than 10 % by weight, less than 8 % by weight, less than 4 % by weight, less than 2 % by weight, less than 1 % by weight or even no plasticiser (0.0 % by weight). In a preferred embodiment of the invention, films A with a low plasticiser content preferably contain 0.0 - 8 % by weight of plasticiser, most preferred 0 - 4 wght %.

The films A or B preferably contain polyvinyl acetals having a proportion of polyvinyl acetate groups, either identically or differently, of 0.1 to 20 mol %, preferably 0.5 to 3 mol %, or 5 to 8 mol %.

The thickness of film B in the starting state is 450 - 2500 µm, preferably 600 - 1000 µm, preferably 700 - 900 µm. A plurality of films B may be used in the invention, either being stacked on each other or separated by films A.

### Polyvinyl Acetal

The films A and B used in accordance with the invention contain polyvinyl acetals, which are produced by acetalisation of polyvinyl alcohol or ethylene vinyl alcohol copolymer.

The films can contain polyvinyl acetals, each having a different polyvinyl alcohol content, degree of acetalisation, residual acetate content, ethylene proportion, molecular weight and/or different chain lengths of the aldehyde of the acetal groups.

In particular, the aldehydes or keto compounds used for the production of the polyvinyl acetals can be linear or branched (that is to say of the "n" or "iso" type) containing 2 to 10 carbon atoms, which leads to corresponding linear or branched acetal groups. The polyvinyl acetals are referred to accordingly as "polyvinyl (iso)acetals" or "polyvinyl (n)acetals".

The polyvinylacetal used in accordance with the invention results in particular from the reaction of at least one polyvinyl alcohol with one or more aliphatic unbranched keto-compounds containing 2 to 10 carbon atoms. To this end, n-butyraldehyde is preferably used.

The polyvinyl alcohols or ethylene vinyl alcohol copolymers used to produce the polyvinyl acetals in the films A or B may be identical or different, pure or a mixture of polyvinyl alcohols or ethylene vinyl alcohol copolymers with different degree of polymerisation or degree of hydrolysis.

The polyvinyl acetate content of the polyvinyl acetals in the films A or B can be set by use of a polyvinyl alcohol or ethylene vinyl alcohol copolymer saponified to an appropriate degree. The polarity of the polyvinyl acetal is influenced by the polyvinyl acetate content, whereby the plasticiser compatibility and the mechanical strength of the respective layer also change. It is also possible to carry out the acetalisation of the polyvinyl alcohols or ethylene vinyl alcohol copolymers with a mixture of a number of aldehydes or keto compounds.

The films A or B preferably contain polyvinyl acetals having a proportion of polyvinyl acetate groups, either identically or differently, of 0.1 to 20 mol %, preferably 0.5 to 3 mol %, or 5 to 8 mol %.

The polyvinyl alcohol content of the polyvinyl acetal PA used in film A may be between 6 - 26 % by weight, 8 - 24 % by weight, 10 - 22 % by weight, 12 - 21 % by weight, 14 - 20 % by weight, 16 - 19 % by weight and preferably between 16 and 21 % by weight or 10 - 16 % by weight.

Independent of film A, the polyvinyl alcohol content of the polyvinyl acetals PB used in film B may be between 14 - 26 % by weight, 16 - 24 % by weight, 17 - 23 % by weight and preferably between 18 and 21 % by weight.

In a preferred embodiment of the invention, film A comprises a polyvinyl acetal PA with a proportion of vinyl alcohol groups from 6 to 26 % by weight and the film B comprises a polyvinyl acetal B with a proportion of vinyl alcohol groups from 14 to 26 % by weight.

The films A or B preferably contain uncross-linked polyvinyl acetal. The use of cross-linked polyvinyl acetals is also possible. Methods for cross-linking polyvinyl acetals are described, for example, in EP 1527107 B1 and WO 2004/063231 A1 (thermal self-cross-linking of polyvinyl acetals containing carboxyl groups), EP 1606325 A1 (polyvinyl acetals cross-linked with polyaldehydes) and WO 03/020776 A1 (polyvinyl acetal cross-linked with glyoxylic acid).

### Plasticizer

Films A and/or B used in accordance with the invention may contain, as plasticiser, one or more compounds selected from the following groups:
- esters of polyvalent aliphatic or aromatic acids, for example dialkyl adipates, such as dihexyl adipate, dioctyl adipate, hexyl cyclohexyl adipate, mixtures of heptyl adipates and nonyl adipates, diisononyl adipate, heptyl nonyl adipate, and esters of adipic acid with cycloaliphatic ester alcohols or ester alcohols containing ether compounds, dialkyl sebacates, such as dibutyl sebacate, and also esters of sebacic acid with cycloaliphatic ester alcohols or ester alcohols containing ether compounds, esters of phthalic acid, such as butyl benzyl phthalate or bis-2-butoxyethyl phthalate.
- esters or ethers of polyvalent aliphatic or aromatic alcohols or oligo ether glycols with one or more unbranched or branched aliphatic or aromatic substituents, for example esters of glycerol, diglycols, triglycols or tetraglycols with linear or branched aliphatic or cycloaliphatic carboxylic acids; Examples of the latter group include diethylene glycol-bis-(2-ethyl hexanoate), triethylene glycol-bis-(2-ethyl hexanoate), triethylene glycol-bis-(2-ethyl butanoate), tetraethylene glycol-bis-n-heptanoate, triethylene glycol-bis-n-heptanoate, triethylene glycol-bis-n-hexanoate, tetraethylene glycol dimethyl ether and/or dipropylene glycol benzoate
- phosphates with aliphatic or aromatic ester alcohols, such as tris(2-ethylhexyl)phosphate (TOF), triethyl phosphate, diphenyl-2-ethylhexyl phosphate, and/or tricresyl phosphate
- esters of citric acid, succinic acid and/or fumaric acid.

By definition, plasticisers are organic liquids having a high boiling point. For this reason, further types of organic liquids having a boiling point above 120 °C can also be used as plasticiser.

Films A in the variants in which a plasticiser WA is present in film A in the starting state, and also films B particularly preferably contain 1,2-cyclohexane dicarboxylic acid diisononyl ester (DINCH) or triethylene glycol-bis-2-ethyl hexanoate (3GO or 3G8) as plasticiser.

Film B may consist of at least two sub-films B' and B", which have a different plasticiser content.

In addition, films A and B may contain further additives, such as alkaline or alkaline earth metal salts residual quantities of water, UV absorber, antioxidants, adhesion regulators, optical brighteners or fluorescent additives, stabilisers, colorants, processing aids, inorganic or organic nanoparticles, pyrogenic silicic acid and/or surface active substances.

Generally, film A is combined with film B and optionally any other films in the preferred orientation and subsequently, the windshields are produced by a lamination process known in the art. Examples of the lamination process as well as the techniques to apply the obscuration area to film A are also known in the art and can be found inter alia in WO 2019/121535 and WO 2019/038043.

Cutting film A can be performed by any conventional techniques of cutting PVB films, e.g. by cutting with a blade, band saw or a laser.

## Claims

1. A windshield comprising two sheets of glass and an interlayer wherein the interlayer comprises at least one film B containing a polyvinyl acetal PB and at least one plasticiser WB, and a film A containing a polyvinyl acetal PA, and optionally at least one plasticiser WA, wherein film A is provided with an obscuration area **characterised in that**
a. the surface area of film A is equal to or more than 50% smaller than the surface area of film B, and
b. at least 30% of the total length of the edge of film A is oriented in an angle of 10º to 80º or 100º to 170º with 0º being defined by a horizontal line through the windshield.

2. The windshield according to claim 1, **characterised in that** the edge along the at least 30% of the total length of the edge of film A which is oriented in an angle of 10º to 80º or 100º to 170º, cut following a zig zag or a wave line.

3. The windshield according to claim 1 or 2, **characterised in that** the obscuration area is provided by a printed or coated layer on at least one surface of film A or the obscuration area is provided by a fully colored film A.

4. The windshield according to any of the claims 1 to 3, **characterised in that** at least 50% of the total length of the edge of film A is oriented in an angle of 10º to 80º or 100º to 170º with 0º being defined by the horizontal line of the windshield.

5. The windshield according to any of the claims 1 to 3, **characterised in that** at least 75% of the total length of the edge of film A is oriented in an angle of 10º to 80º or 100º to 170º with 0º being defined by the horizontal line of the windshield.

6. The windshield according to any of the claims 1 to 5, **characterised in that** film A comprises transparent detection areas for optical detection devices wherein the minimum distance between any of the edges of film A and the edge of the transparent detection area is equal to or more than 2 cm.

7. The windshield according to any of the claims 1 to 6, **characterised in that** the windshield further comprises an obscuration band which is provided at least in part by a black frit coating on at least one surface of at least one of the glass sheets.

8. The windshield according to any of the claims 1 to 7, **characterised in that** the obscuration band is provided at least in part by the obscuration provided by film A.

9. The windshield according to any of the claims 1 to 8, **characterised in that** at least 30% of the total length of the edge of film A is distanced equal to or less than 10 mm from the closest edge of the obscuration area.

10. The windshield according to any of the claims 1 to 9, **characterised in that** at least 50% of the total length of the edge of film A is distanced equal to or less than 2 mm from the closest edge of the obscuration area.

11. The windshield according to any of the claims 1 to 9, **characterised in that,** prior to combining the two glass sheets, the amount of plasticiser WA in film A is less than 10 % by weight and the amount of plasticiser WB in film B is at least 22 % by weight.
